# EUROPEAN PATENT APPLICATION

(11) **EP 4 844 888 A1**
(43) Date of publication of application: **25.11.2026**
(21) Application number: 26180011.4
(22) Date of filing: 20.05.2026
(51) Int. Cl.: H01M 10/42, H01M 10/48, H01M 50/204, H01M 50/691

(54) **BATTERY MODULE AND DRAINAGE SYSTEM THEREFOR**

(30) Priority: 23.05.2025 KR 20250067585
(71) Applicant: SAMSUNG SDI CO., LTD., Yongin-si, Gyeonggi-do 17084 (KR)
(72) Inventor: LEE, Jaeyoung, 17084 Yongin-si (KR)
(74) Representative: Marks & Clerk LLP

(57) **Abstract**

A battery module includes: a plurality of battery cells; and an insulation flooring configured to fix the plurality of battery cells and having a drain hole for drainage of a liquid. The drain hole is between adjacent ones of the battery cells and has an obliquely inclined inner surface.

## Description

### BACKGROUND

### 1. Field

Aspects of embodiments of the present disclosure relate to a battery module and a drainage system for the battery module.

### 2. Description of the Related Art

Different from primary batteries that are not designed to be charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as in hybrid vehicles or electric vehicles, and for power storage.

Secondary batteries are also key components in energy storage systems (ESSs), which are systems that are able to store surplus electricity or electricity produced using renewable energy. The ESSs are usable to smoothly control power supply and demand by storing idle (or excess) power during times of low electricity demand and then supplying it during times of high electricity demand.

In spaces or facilities where ESSs are installed and operated, equipment for suppressing battery fires caused by electric shocks, short circuits, external surges, etc. must be provided. A typical fire-extinguishing system consists of fire detection sensors, sprinklers that are installed around battery racks, on ceilings, or the like, fire-extinguishing agent sprayers, and so on.

This fire-extinguishing system is an indirect spray type, which sprays water or fire-extinguishing agents close to batteries or over the entire region where batteries are installed in the event of a battery fire. It is difficult for typical fire-fighting equipment to extinguish or suppress fires at an early stage because the amount and pressure of flames ejected from the vents of battery cells increase as the energy density of batteries continues to increase.

Hence, to effectively suppress several battery fires and enable early extinguishment in the event of a high-pressure fire, a direct-spray-type fire-extinguishing system has been developed and utilized recently that automatically sprays fire-extinguishing agents at the point of thermal runaway of batteries or confines fire-extinguishing agents in the external housing of battery modules to prevent the spread of the fire.

The direct-spray-type fire-extinguishing system may, however, cause the fire-extinguishing agents to remain inside the external housing for a long period of time, which creates a high-humidity environment inside the external housing, resulting in a phenomenon in which water is pooled on an insulation flooring. This phenomenon of water pooling may cause current to flow between the external housing and battery cells and an external housing to thereby break the insulation therebetween, which leads to a failure of battery management systems (BMSs) and various safety accidents.

The above information disclosed in this Background section is for enhancement of understanding of the background of the present disclosure, and therefore, it may contain information that does not constitute related (or prior) art.

### SUMMARY

Accordingly, embodiments of the present disclosure provide a battery module with a drain hole in an insulation flooring and a drainage system for the battery module.

However, aspects and features of the present disclosure are not limited to the above aspects and features, and other aspects and features not mentioned herein will be clearly understood by those skilled in the art from the description of the present disclosure below.

According to an embodiment of the present disclosure, a battery module includes a plurality of battery cells and an insulation flooring configured to fix the battery cells and having a drain hole for drainage of a liquid. The drain hole is between adjacent ones of the battery cells and has an obliquely inclined inner surface.

The drain hole may have a first oblique angle at a first point and a second oblique angle different from the first oblique angle at a second point.

The drain hole may have a third oblique angle at a third point that is perpendicular.

The battery module may further include a bushing removably coupled to the drain hole, and the bushing may have a hole.

The drain hole may be sized from 1ø to 2ø.

The battery module may further include a filter in the drain hole and configured to be permeable to water but impermeable to fire-extinguishing agents.

The insulation flooring may have a bottom inclined toward the drain hole.

The battery module may further include a drainage device in the drain hole and having a hole connecting the inside and the outside of the insulation flooring and a switching member at the entrance of the hole. The drainage device may be configured to be opened and closed by control of a drainage control device.

The control of the drainage control device may be determined by using an actuation condition of the drainage device set based on status information of the battery module.

The status information of the battery module may include at least one of a temperature, pressure, and fire information of the battery module, a capacity of fire-extinguishing agents sprayed to the battery module, whether or not there is a short circuit in the battery module, and position information of water pooled in the battery module.

According to another embodiment of the present disclosure, a drainage system for battery modules includes a battery module including a plurality of battery cells, an insulation flooring configured to fix the battery cells and having a drain hole for drainage of a liquid, and a drainage device in the drain hole and having a hole connecting the inside and the outside of the insulation flooring and a switching member at the entrance of the hole, and may further include a drainage control device configured to control opening and closing of the drainage device. The drain hole is between adjacent ones of the battery cells and has an obliquely inclined inner surface, and the drain hole has a first oblique angle at a first point and a second oblique angle different from the first oblique angle at a second point.

The drain hole may have a third oblique angle at a third point that is perpendicular.

The battery module may further include a bushing removably coupled to the drain hole, and the bushing may have a hole.

The battery module may further include a filter in the drain hole and configured to be permeable to water but impermeable to fire-extinguishing agents, and the insulation flooring may have a bottom inclined toward the drain hole.

The drainage control device may include an actuator configured to actuate the drainage device, a sensor configured to measure status information of the battery module, and a controller configured to control the actuation unit to control the actuation of the drainage device based on the status information of the battery module.

The status information of the battery module may include at least one of a temperature, pressure, and fire information of the battery module, a capacity of fire-extinguishing agents sprayed to the battery module, whether or not there is a short circuit in the battery module, and position information of water pooled in the battery module.

The controller may set an actuation condition of the drainage device based on the status information of the battery module and may control the actuation of the drainage device according to the actuation condition, and the actuation condition may include at least one of identification information of the hole to be actuated, a start of opening, an opening speed, a size of the open hole, a start of closing, a closing speed, and a size of the closed hole.

The controller may be configured to reset the actuation condition of the drainage device at a reference time or reference time interval.

The controller may be configured to reset the actuation condition of the drainage device in response to the status information of the battery module being changed beyond a reference range.

The actuation condition may further include identification information of the drainage device to be actuated.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings:
FIG. 1A is a top perspective view of a prismatic secondary battery;
FIG. 1B is a cross-sectional view taken along the line I-I' in FIG. 1A;
FIGS. 2A and 2B are perspective views of a battery module according to an embodiment of the present disclosure;
FIG. 3 is a top view illustrating a position of a drain hole in the battery module according to the embodiment of the present disclosure;
FIG. 4 is a side view illustrating a shape of a drain hole according to an embodiment of the present disclosure;
FIG. 5 is a side view illustrating a shape of a drain hole according to another embodiment of the present disclosure;
FIG. 6 is a side view illustrating a shape of a drain hole according to another embodiment of the present disclosure;
FIG. 7 is a top view illustrating a drainage system for battery modules according to an embodiment of the present disclosure;
FIG. 8 is a side view illustrating a drainage device according to an embodiment of the present disclosure;
FIG. 9 is a block diagram describing a drainage control device according to an embodiment of the present disclosure; and
FIG. 10 is a flowchart describing a battery drainage control method according to an embodiment of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but instead should be understood as having meanings and concepts consistent with the scope of the present disclosure based on the principle that an inventor can define the concept of each term suitably in order to describe his/her own invention in the best way possible. Because the embodiments described in this specification and the configurations illustrated in the drawings are only examples of the present disclosure and do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale, and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions, such as "at least one" and "one or more," preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

Examples of secondary batteries include a coin type, a cylindrical type, a prismatic type, and a pouch type. Aspects and features of the present disclosure are generally applicable to a prismatic secondary battery, but the present disclosure is not limited thereto. Therefore, the prismatic secondary battery will be briefly described prior to description of embodiments of the present disclosure.

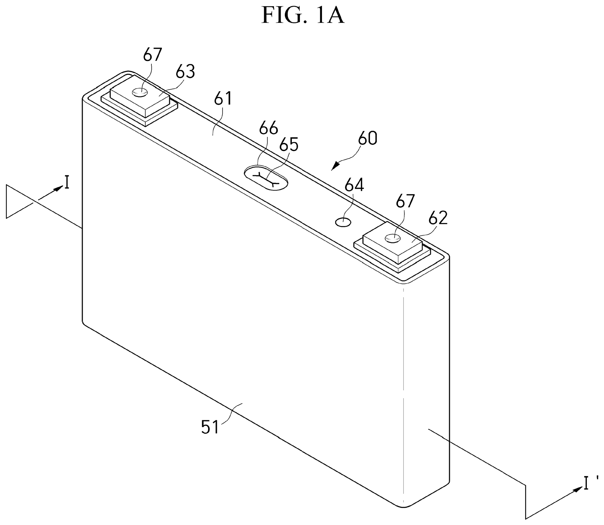

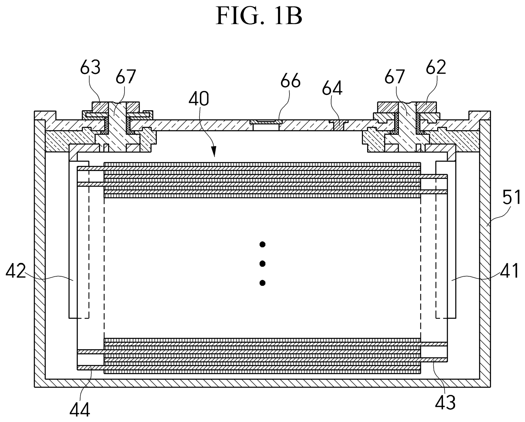

FIG. 1A is a top perspective view of the prismatic secondary battery. FIG. 1B is a cross-sectional view taken along the line I-I' in FIG. 1A.

The external appearance of the prismatic secondary battery illustrated in FIG. 1A will be described.

A casing (or case) 51 defines an overall appearance of the prismatic secondary battery and may be made of conductive metal, such as aluminum, aluminum alloy, or nickel-plated steel. In addition, the casing 51 may provide (or may form) a space for accommodating an electrode assembly therein.

A cap assembly 60 may include a cap plate 61 that covers the opening in the casing 51, and the cap plate 61 may be made of a conductive material. Here, a first terminal 62 and a second terminal 63 may be electrically connected to respective positive and negative (or negative and positive) electrodes inside the casing 51 and may be installed to protrude outwardly through the cap plate 61.

The cap plate 61 may have an electrolyte injection port 64 formed to receive a sealing plug and a vent 66 formed with a notch 65. The vent 66 is for degassing the secondary battery, for example, for discharging excess gas generated inside the secondary battery.

With reference to FIG. 1B, the internal structure of the prismatic secondary battery and the coupling structure with the cap assembly 60 will be described.

As illustrated in FIG. 1B, the prismatic secondary battery may generally include an electrode assembly 40, a first current collector part 41, the first terminal 62, a second current collector part 42, the second terminal 63, and the cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to a longitudinal direction of the casing 51. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may include (or may consist of) one or more electrode assemblies, which are stacked such that their long sides are adjacent to each other and accommodated in the casing 51, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some embodiments, the first electrode tab 43 may be formed by cutting the first electrode plate to protrude to one side in advance when manufacturing the first electrode plate and may protrude farther to one side than the separator without separate cutting.

The second electrode plate may be formed by applying a second electrode active material, such as a transition metal oxide, to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some embodiments, the second electrode tab 44 may be formed by cutting the second electrode plate to protrude to the other side in advance when manufacturing the second electrode plate, and may protrude farther to the other side than the separator without separate cutting.

In some embodiments, the first electrode tab 43 may be located on the right end side of the electrode assembly 40, and the second electrode tab 44 may be located on the left end side of the electrode assembly 40. In another embodiment, the first electrode tab 43 and the second electrode tab 44 may be located on one end side (e.g., the same end side) of the electrode assembly 40 in the same direction. Here, the left and the right are represented based on the secondary battery as illustrated in FIG. 1 for convenience of explanation, but they may change in position when the secondary battery is rotated left and right or up and down.

The separator prevents a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

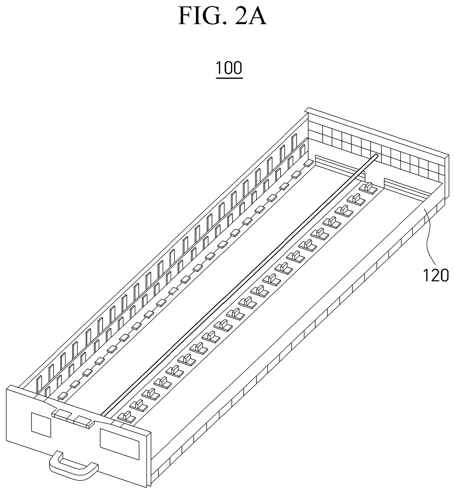

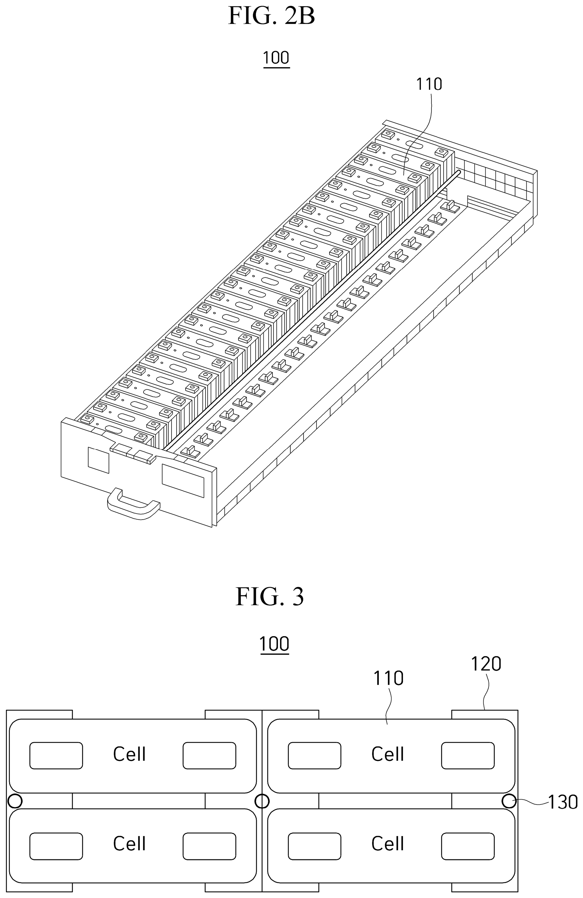

FIGS. 2A and 2B are perspective views of a battery module 100 according to an embodiment of the present disclosure.

Referring to FIG. 2, the battery module 100, according to an embodiment of the present disclosure, may include battery cells 110 and an insulation flooring 120.

FIG. 2A illustrates the insulation flooring 120, and FIG. 2B illustrates a state in which the battery cells 110 are assembled (or arranged) on the insulation flooring 120.

The insulation flooring 120 is configured to fix the battery cells 110. The insulation flooring 120 is a region where fire-extinguishing agents are sprayed in the event of a fire and may be configured to confine the fire-extinguishing agents to impregnate (or partially submerge) the battery cells 110 therewith. For this purpose, the insulation flooring 120 may have a bath structure.

The fire-extinguishing agents sprayed on the insulation flooring 120 remain thereon for a certain period of time to ensure safe fire extinguishment. This creates a high-humidity environment inside the battery module 100, resulting in a phenomenon in which water is pooled on the insulation flooring 120. This phenomenon of water pooling may cause current to flow between the battery cells 110 and an external housing to thereby break the insulation (e.g., the electrical insulation) therebetween, which leads to a failure of battery management systems (BMSs) and various safety accidents.

Accordingly, embodiments of the present disclosure overcome the above-mentioned problems by providing a battery module 100 with a drain hole 130 in an insulation flooring 120 and a drainage system therefor.

FIG. 3 is a top view illustrating a position of the drain hole 130 in the battery module 100, according to an embodiment of the present disclosure.

Referring to FIG. 3, the drain hole 130, according to an embodiment of the present disclosure, may be located at the bottom of the insulation flooring 120. The drain hole 130 may be configured to drain liquid containing water and fire-extinguishing agents.

As described above, the insulation flooring 120 is configured to fix the battery cells 110. Accordingly, to avoid interference by the battery cells 110 during drainage, the drain hole 130 may be located where no battery cells 110 are present in the insulation flooring 120. For example, the drain hole 130 may be located between one battery cell 110 and another battery cell 110 (e.g., between two adjacent ones of the battery cells 110).

The insulation flooring 120 may have a bottom that is inclined toward the point where the drain hole 130 is located. This allows the water pooled on the insulation flooring 120 to easily flow to the drain hole 130 for drainage.

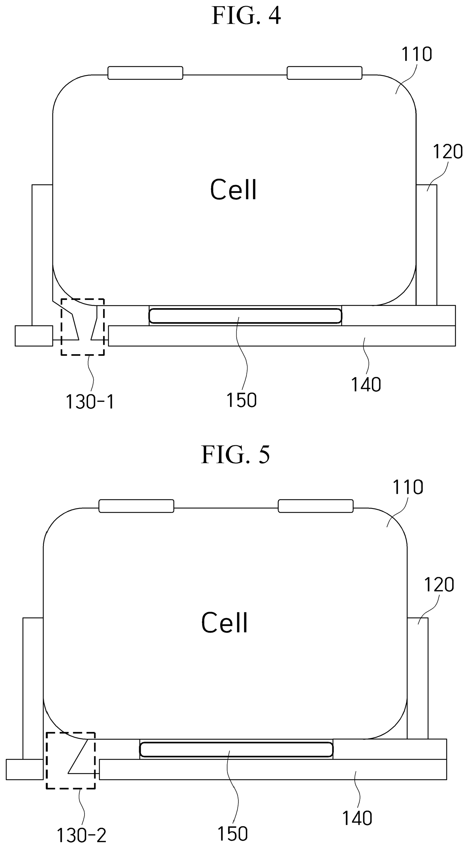

FIG. 4 is a side view illustrating a shape of a drain hole 130-1 according to an embodiment of the present disclosure.

Referring to FIG. 4, the drain hole 130-1, according to the illustrated embodiment, may have a structure that becomes narrower in size toward the lower end thereof, and the drain hole 130-1 may have a cross-sectional structure that has an obliquely inclined inner surface.

The drain hole 130-1 does not have a constantly sloped angle (e.g., does not have a constant angle of oblique line) and may be configured such that an oblique angle at one point is different from an oblique angle at another point. In other words, the drain hole 130-1 may have an oblique angle at the first point thereof and a different oblique angle at the second point thereof.

As illustrated in the drawing, the drain hole 130-1 may be configured such that an oblique angle at the point thereof located inside the insulation flooring 120 is greater than an oblique angle at the point thereof located outside the insulation flooring 120, thereby increasing the drainage rate of water pooled on the inside of the insulation flooring 120.

The drain hole 130-1 may allow the drainage rate at one point to be regulated depending on the oblique angle thereof. The drain hole 130-1 may be configured such that the drainage rate at the point thereof with a larger oblique angle is faster and the drainage rate at the point thereof with a smaller oblique angle is slower. Accordingly, the drain hole 130-1 may be have a larger oblique angle at the point thereof in a direction in which a relatively large amount of water is pooled on the inside of the insulation flooring 120.

Because the fire-extinguishing agents must remain in the insulation flooring 120 for a certain period of time to extinguish a fire in the battery cells 110 as described above, the drain hole 130-1 may be sized and have an oblique angle so as ensure that the fire-extinguishing agents are not drained too quickly therefrom. For example, the size and oblique angle of the drain hole 130-1 may be set (or designed) so that the fire-extinguishing agents are drained in a reference amount or less for a certain period of time, and the drain hole 130-1 may be sized from 1ø to 20.

As illustrated in the drawing, the drain hole 130-1 may be located where there are no cooling plate 140 and gap filter 150 in the insulation flooring 120.

The drain hole 130-1 may be further equipped with a filter that is configured to be permeable to water but impermeable to fire-extinguishing agents. The filter may facilitate drainage of water and suppress drainage of fire-extinguishing agents from the drain hole 130-1.

FIG. 5 is a side view illustrating a shape of a drain hole 130-2 according to another embodiment of the present disclosure.

Referring to FIG. 5, the drain hole 130-2 according to the illustrated embodiment, may have a structure that becomes narrower in size toward the lower end thereof, and the drain hole 130-2 may have a cross-sectional structure that has an obliquely inclined inner surface or perpendicularly inclined inner surface.

The drain hole 130-2 does not have a constant angle of oblique line and may be designed such that an oblique angle at one point is different from an oblique angle at another point. For example, the drain hole 130-2 may have an oblique angle at the first point thereof and a different oblique angle at the second point thereof.

As illustrated in the drawing, the drain hole 130-2 may be configured such that an oblique angle at the point thereof located inside the insulation flooring 120 is smaller than an oblique angle at the point thereof located outside the insulation flooring 120. For example, the oblique angle at the point of the drain hole 130-2 located outside the insulation flooring 120 may be 90 degrees, that is, a right angle. For example, the drain hole 130-2 may have an oblique angle that is perpendicular at the third point thereof.

The drain hole 130-2 may be designed such the drainage rate at one point is regulated depending on the oblique angle thereof. The drain hole may be configured such that the drainage rate at the point thereof with a larger oblique angle is faster and the drainage rate at the point thereof with a smaller oblique angle is slower.

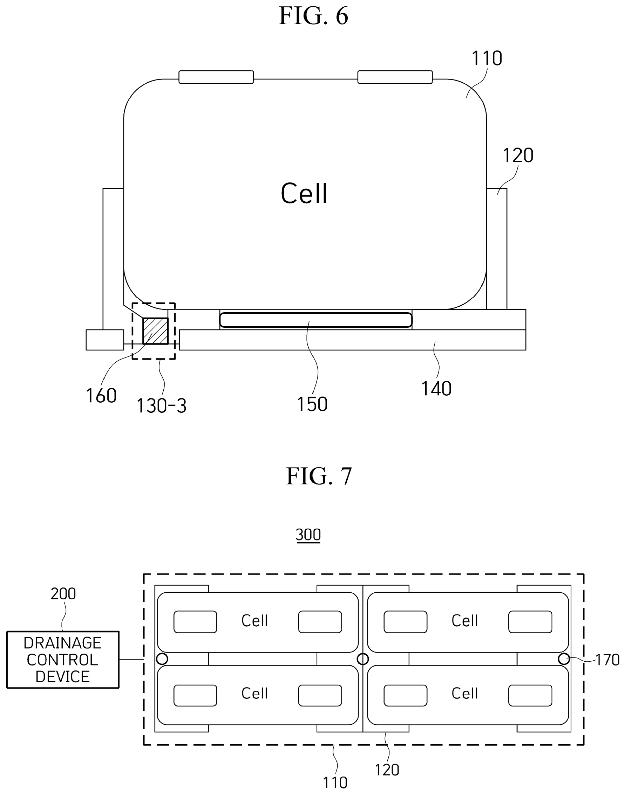

FIG. 6 is a side view illustrating a shape of a drain hole 130-3 according to another embodiment of the present disclosure.

Referring to FIG. 6, the drain hole 130-3 according to the illustrated embodiment may be in the form of the drain hole 130-1 or 130-2 as described above, with the exception of an additional bushing included therein.

The bushing may be configured to change the size of the drain hole 130-3. For example, the bushing may include at least one hole (e.g., opening) for drainage.

The bushing may be detachably coupled to the drain hole 130-3. Accordingly, the bushing may be replaceable to suit (or to determine) the size of the drain hole 130-3.

For example, a bushing with a smaller hole may be coupled to the drain hole 130-3 to make the size of the drain hole 130-3 smaller, or a bushing with a larger hole size may be coupled to the drain hole 130-3 to make the size of the drain hole 130-3 larger.

FIG. 7 is a top view illustrating a drainage system for battery modules 300 according to an embodiment of the present disclosure.

Referring to FIG. 7, the drainage system for battery modules 300 according to the illustrated embodiment may include a battery module 100 having at least one drainage device 170 and a drainage control device 200.

The drainage device 170 may be placed on (or in) the insulation flooring 120 of the battery module 100 and installed in the above-mentioned drain hole 130.

The drainage device 170 may include at least one hole (e.g., opening) that connects the inside and outside of the insulation flooring 120 to drain the insulation flooring 120.

Different from the above-described drain hole 130, the drainage device 170 may be configured to allow for opening and closing of the hole. For this purpose, the drainage device 170 may further include a switching member (e.g., a switch) at the entrance of the hole.

The drainage control device 200 may be connected to the battery module 100 to control the opening and closing of the drainage device 170 in the battery module 100.

The drainage control device 200 may control the opening of the drainage device 170 if drainage is required and may control the closing of the drainage device 170 if drainage is not required.

For example, the drainage control device 200 may control at least one hole of the drainage device 170 to be opened if drainage is required and may control the at least one hole of the drainage device 170 to be closed if drainage is not required.

The drainage control device 200 may measure status information of the battery module 100. The status information of the battery module 100 may include temperature, pressure, and/or fire information of the battery module 100, a capacity of fire-extinguishing agents sprayed to the battery module 100, whether or not there is a short circuit in the battery module 100, position information of water pooled in the battery module 100, and so on.

The drainage control device 200 may control various types of actuation of the drainage device 170 based on the status information of the battery module 100.

The drainage control device 200 may set an actuation condition of the drainage device 170 based on the status information of the battery module 100.

The actuation condition of the drainage device 170 may include identification information of the hole to be actuated, a start of opening, an opening speed, a size of the opened hole, a start of closing, a closing speed, a size of the closed hole, and so on.

The drainage control device 200 controls the actuation of the drainage device 170 according to the set (or determined) actuation condition of the drainage device 170.

As an example, the drainage control device 200 may use the actuation condition of the drainage device 170 to identify the hole to be actuated and open that hole according to the opening speed and the size of the opened hole.

As another example, the drainage control device 200 may use the actuation condition of the drainage device 170 to identify the hole to be actuated and close that hole according to the closing speed and the size of the closed hole.

In some embodiments, the actuation condition of the drainage device 170 may further include identification information of the drainage device 170 to be actuated. In such an embodiment, the drainage control device 200 may use the actuation condition of the drainage device 170 to identify the drainage device 170 to be actuated and control the opening and closing of that drainage device 170.

The drainage control device 200 may reset the actuation condition of the drainage device 170 at different points of time. As an example, the drainage control device 200 may reset the actuation condition of the drainage device 170 at a reference (or preset) time or reference (or preset) time interval. As another example, the drainage control device 200 may reset the actuation condition of the drainage device 170 if the status information of the battery module 100 is changed beyond a reference (or preset) range.

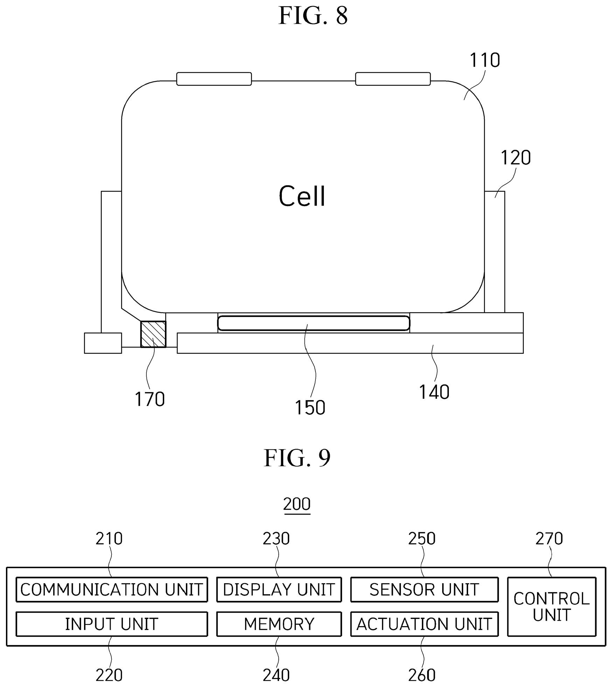

FIG. 8 is a side view illustrating the drainage device 170 according to an embodiment of the present disclosure.

Referring to FIG. 8, the drainage device 170, according to an embodiment of the present disclosure, may be placed on (or in) the insulation flooring 120 of the battery module 100 and may be placed at the same position as the above-mentioned drain hole 130.

The drainage device 170 may include at least one hole that connects the inside and outside of the insulation flooring 120 for drainage of the insulation flooring 120.

Different from the above-described drain hole 130, the drainage device 170 may be configured to allow for opening and closing of the hole. For this purpose, the drainage device 170 may further include a switching member (e.g., a switch) at the entrance of the hole.

FIG. 9 is a block diagram describing the drainage control device 200 according to an embodiment of the present disclosure.

Referring to FIG. 9, the drainage control device 200, according to an embodiment of the present disclosure, may include a communication unit (e.g., a transceiver) 210, an input unit (e.g., an input device) 220, a display unit (e.g., a display) 230, a memory 240, a sensor unit (e.g., a sensor) 250, an actuation unit (e.g., an actuator) 260, and a control unit (e.g., a controller) 270.

The communication unit 210 may communicate with a user or administrator terminal over a network and may communicate with a server configured to control the drainage system for battery modules 300. For this purpose, the communication unit 210 may use Internet communication, such as 5th generation (5G), long term evolution-advanced (LTE-A), long term evolution (LTE), and wireless fidelity (Wi-Fi).

The input unit 220 generates input data in response to the input of an administrator that manages the drainage system for battery modules 300. For example, the input unit 220 may receive different types of data on the operating conditions of the drainage device 170, operation control signals of the drainage device 170, etc., from the administrator. For this purpose, the input unit 220 may include a keypad, a keyboard, a dome switch, a touch panel, a touch key, and a button.

The display unit 230 outputs output data in response to the operation of the drainage system for battery modules 300. For example, the display unit 230 may display different types of data of the battery module 100 measured by the sensor unit 250, a status of operation of the drainage device 170, and so on. For this purpose, the display unit 230 may include a liquid crystal display (LCD), a light emitting diode (LED) display, an organic light emitting diode (OLED) display, a micro-electromechanical system (MEMS) display, and an electronic paper display.

The memory 240 stores programs for operation of the drainage device 170. For example, the memory 240 may store condition information regarding the actuation of the drainage device 170, an algorithm for controlling the operation of the drainage device 170, etc., by the control unit 270.

The sensor unit 250 may measure status information of the battery module 100. The status information of the battery module 100 may include a temperature, pressure, and/or fire information of the battery module 100, a capacity of fire-extinguishing agents sprayed to the battery module 100, whether or not there is a short circuit in the battery module 100, position information of water pooled in the battery module 100, and so on. The sensor unit 250 may measure the status information of the battery module 100 through sensors installed in the battery module 100. For this purpose, the sensor unit 250 may include various sensors, such as a temperature sensor, a pressure sensor, a fire sensor, and a moisture sensor.

The actuation unit 260 may actuate the drainage device 170. For example, the actuation unit 260 may actuate at least one hole of the drainage device 170 to be opened or closed, for which the actuation unit 260 may include a motor.

The control unit 270 may control the communication unit 210, the input unit 220, the display unit 230, the memory 240, the sensor unit 250, and the actuation unit 260.

The control unit 270 may control the actuation unit 260 to control the actuation of the drainage device 170. The control unit 270 may control the opening of the drainage device 170 if drainage is required and may control the closing of the drainage device 170 if drainage is not required.

For example, the control unit 270 may control at least one hole of the drainage device 170 to be opened if drainage is required and may control at least one hole of the drainage device 170 to be closed if drainage is not required.

The control unit 270 may control the sensor unit 250 to measure status information of the battery module 100. The status information of the battery module 100 may include a temperature, pressure, and/or fire information of the battery module 100, a capacity of fire-extinguishing agents sprayed to the battery module 100, whether or not there is a short circuit in the battery module 100, position information of water pooled in the battery module 100, and so on.

The control unit 270 may control various types of actuation of the drainage device 170 based on the status information of the battery module 100.

The control unit 270 may set an actuation condition of the drainage device 170 based on the status information of the battery module 100. The actuation condition of the drainage device 170 may include identification information of the hole to be actuated, a start of opening, an opening speed, a size of the opened hole, a start of closing, a closing speed, a size of the closed hole, and so on.

The control unit 270 controls the actuation unit 260 according to the set actuation condition of the drainage device 170, thereby controlling the actuation of the drainage device 170.

As an example, the control unit 270 may use the actuation condition of the drainage device 170 to identify the hole to be actuated and may open that hole according to the opening speed and the size of the opened hole.

As another example, the control unit 270 may use the actuation condition of the drainage device 170 to identify the hole to be actuated and may close that hole according to the closing speed and the size of the closed hole.

As a further example, the actuation condition of the drainage device 170 may further include identification information of the drainage device 170 to be actuated. In such an embodiment, the control unit 270 may use the actuation condition of the drainage device 170 to identify the drainage device 170 to be actuated and control the opening and closing of that drainage device 170.

The control unit 270 may reset the actuation condition of the drainage device 170 at different points of time. As an example, the control unit 270 may reset the actuation condition of the drainage device 170 at a reference (or preset) time or reference (or preset) time interval. As another example, the control unit 270 may reset the actuation condition of the drainage device 170 if the status information of the battery module 100 is changed beyond a reference (or preset) range.

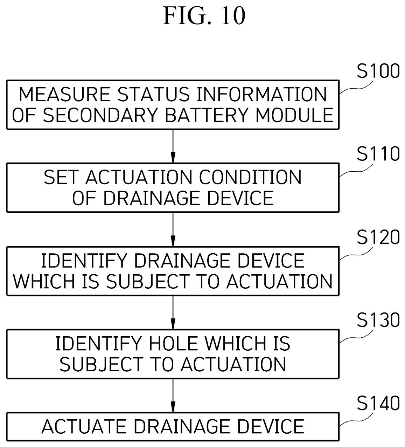

FIG. 10 is a flowchart describing a battery drainage control method according to an embodiment of the present disclosure.

Referring to FIG. 10, the battery drainage control method, according to an embodiment of the present disclosure, may include steps S100 to S140.

Step S100 is a step of measuring status information of a battery module 100 by a drainage control device 200.

Step S110 is a step of, by the drainage control device 200, setting an actuation condition of a drainage device 170 based on the status information of the battery module 100.

Step S120 is a step of, by the drainage control device 200, using the actuation condition of the drainage device 170 to identify the drainage device 170 that is subject to actuation.

Step S130 is a step of, by the drainage control device 200, using the actuation condition of the drainage device 170 to identify a hole that is subject to actuation of the identified drainage device 170.

Step S140 is a step of, by the drainage control device 200, using the actuation condition of the drainage device 170 to open and close the hole of the identified drainage device 170.

The battery drainage control method, according to embodiments of the present disclosure, has been described above with reference to the flowchart presented in the drawing. For the purposes of simplicity, the method has been illustrated and described as a series of blocks, but the present disclosure is not limited to the order of the blocks. In addition, some blocks may occur in a different order or concurrently with other blocks than illustrated and described herein, and various different branches, flow paths, and sequences of blocks may be implemented that achieve the same or similar results. Furthermore, all of the blocks illustrated may not be required to implement the method described herein.

Meanwhile, in the description with reference to FIG. 10, each step may be further divided into additional steps or combined into fewer steps, depending on the implementation of the present disclosure. Additionally, some steps may be omitted or the order between steps may be changed. Moreover, even if there are any other omitted, the contents of FIGS. 1 to 9 may be applied to the contents of FIG. 10. Similarly, the contents of FIG. 10 may be applied to the contents of FIGS. 1 to 9.

As is apparent from the above description, according to embodiments of the present disclosure, it is possible to prevent various issues that may occur due to water pooling in the battery module due to the operation of the fire-extinguishing system and, in particular, to drastically reduce a possibility of insulation failure.

According to embodiments of the present disclosure, it is possible to stably drain water by controlling the drain hole based on the status information of the battery module.

According to embodiments of the present disclosure, the drainage system for battery modules can ensure safety against fire because it does not affect the fire-extinguishing system.

However, aspects and features of the present disclosure are not limited to those described above, and other aspects and features not mentioned will be clearly understood by a person skilled in the art from the detailed description, described below.

Although the present disclosure has been described above in connection with some embodiments and drawings, the present disclosure is not limited to these embodiments. A person having ordinary knowledge in the art to which the present disclosure pertains may modify and change the present disclosure within the technical scope of the present disclosure and the equivalent range of the following claims.

Embodiments are set out in the following clauses:
1. A battery module comprising:
   a plurality of battery cells; and
   an insulation flooring configured to fix the plurality of battery cells and having a drain hole for drainage of a liquid, the drain hole being located between adjacent ones of the battery cells and having an obliquely inclined inner surface.
2. The battery module according to clause 1, wherein the inner surface of the drain hole has a first oblique angle at a first point and a second oblique angle at a second point, the first and second oblique angles being different from each other.
3. The battery module according to clause 2, wherein the inner surface of the drain hole has a third oblique angle at a third point that is perpendicular.
4. The battery module according to clause 1, 2 or 3, further comprising a bushing removably coupled to the drain hole,
   wherein the bushing has a hole.
5. The battery module according to any preceding clause, wherein the drain hole is sized from 1ø to 2ø.
6. The battery module according to any preceding clause, further comprising a filter in the drain hole and configured to be permeable to water but impermeable to fire-extinguishing agents.
7. The battery module according to any preceding clause, wherein the insulation flooring has a bottom that is inclined toward the drain hole.
8. The battery module according to any preceding clause, further comprising a drainage device in the drain hole and comprising a hole connecting the inside and the outside of the insulation flooring and a switching member at the entrance of the hole,
   wherein the drainage device is configured to be opened and closed by control of a drainage control device.
9. The battery module according to clause 8, wherein the control of the drainage control device is determined by using an actuation condition of the drainage device determined based on status information of the battery module.
10. The battery module according to clause 9, wherein the status information of the battery module comprises at least one of a temperature, pressure, and fire information of the battery module, a capacity of fire-extinguishing agents sprayed to the battery module, whether or not there is a short circuit in the battery module, and position information of water pooled in the battery module.
11. A drainage system for battery modules, the drainage system comprising:
   a battery module comprising:
      a plurality of battery cells;
      an insulation flooring configured to fix the plurality of battery cells and having a drain hole for drainage of a liquid; and
      a drainage device in the drain hole and having a hole connecting the inside and the outside of the insulation flooring and a switching member at the entrance of the hole; and
   a drainage control device configured to control opening and closing of the drainage device,
   wherein the drain hole is between adjacent ones of the plurality of battery cells and has an obliquely inclined inner surface, and
   wherein the drain hole has a first oblique angle at a first point and a second oblique angle at a second point that is different from the first oblique angle.
12. The drainage system according to clause 11, wherein the drain hole has a third oblique angle at a third point, the third oblique angle being perpendicular.
13. The drainage system according to clause 11 or 12, wherein the battery module further comprises a bushing removably coupled to the drain hole, and
   wherein the bushing has a hole.
14. The drainage system according to clause 11, 12 or 13, wherein the battery module further comprises a filter in the drain hole and configured to be permeable to water but impermeable to fire-extinguishing agents, and
   wherein the insulation flooring has a bottom inclined toward the drain hole.
15. The drainage system according to any one of clauses 11 to 14, wherein the drainage control device comprises:
   an actuator configured to actuate the drainage device;
   a sensor configured to measure status information of the battery module; and
   a controller configured to control the actuator to control the actuation of the drainage device based on the status information of the battery module.
16. The drainage system according to clause 15, wherein the status information of the battery module comprises at least one of a temperature, pressure, and fire information of the battery module, a capacity of fire-extinguishing agents sprayed to the battery module, whether or not there is a short circuit in the battery module, and position information of water pooled in the battery module.
17. The drainage system according to clause 15 or 16, wherein the controller is configured to set an actuation condition of the drainage device based on the status information of the battery module and to control the actuation of the drainage device according to the actuation condition, and
   wherein the actuation condition comprises at least one of identification information of the hole to be actuated, a start of opening, an opening speed, a size of the open hole, a start of closing, a closing speed, and a size of the closed hole.
18. The drainage system according to clause 17, wherein the controller is configured to reset the actuation condition of the drainage device at a reference time or reference time interval.
19. The drainage system according to clause 17 or 18, wherein the controller is configured to reset the actuation condition of the drainage device in response to the status information of the battery module being changed beyond a reference range.
20. The drainage system according to clause 17, 18 or 19, wherein the actuation condition further comprises identification information of the drainage device to be actuated.

## Claims

1. A battery module comprising:
a plurality of battery cells; and
an insulation flooring configured to fix the plurality of battery cells and having a drain hole for drainage of a liquid, the drain hole being located between adjacent ones of the battery cells and having an obliquely inclined inner surface.

2. The battery module as claimed in claim 1, wherein the inner surface of the drain hole has a first oblique angle at a first point and a second oblique angle at a second point, the first and second oblique angles being different from each other.

3. The battery module as claimed in claim 2, wherein the inner surface of the drain hole has a third oblique angle at a third point that is perpendicular.

4. The battery module as claimed in claim 1, 2 or 3, further comprising a bushing removably coupled to the drain hole,
wherein the bushing has a hole.

5. The battery module as claimed in any preceding claim, wherein the drain hole is sized from 1ø to 2ø.

6. The battery module as claimed in any preceding claim, further comprising a filter in the drain hole and configured to be permeable to water but impermeable to fire-extinguishing agents.

7. The battery module as claimed in any preceding claim, wherein the insulation flooring has a bottom that is inclined toward the drain hole.

8. The battery module as claimed in any preceding claim, further comprising a drainage device in the drain hole and comprising a hole connecting the inside and the outside of the insulation flooring and a switching member at the entrance of the hole,
wherein the drainage device is configured to be opened and closed by control of a drainage control device, and optionally
wherein the control of the drainage control device is determined by using an actuation condition of the drainage device determined based on status information of the battery module, and optionally
wherein the status information of the battery module comprises at least one of a temperature, pressure, and fire information of the battery module, a capacity of fire-extinguishing agents sprayed to the battery module, whether or not there is a short circuit in the battery module, and position information of water pooled in the battery module.

9. A drainage system for battery modules, the drainage system comprising:
a battery module as claimed in any preceding claim, further comprising a drainage device in the drain hole and having a hole connecting the inside and the outside of the insulation flooring and a switching member at the entrance of the hole; and
a drainage control device configured to control opening and closing of the drainage device,
wherein the drain hole has a first oblique angle at a first point and a second oblique angle at a second point that is different from the first oblique angle.

10. The drainage system as claimed in claim 9, wherein the drain hole has a third oblique angle at a third point, the third oblique angle being perpendicular.

11. The drainage system as claimed in claim 9 or 10, wherein the drainage control device comprises:
an actuator configured to actuate the drainage device;
a sensor configured to measure status information of the battery module; and
a controller configured to control the actuator to control the actuation of the drainage device based on the status information of the battery module.

12. The drainage system as claimed in claim 11, wherein the status information of the battery module comprises at least one of a temperature, pressure, and fire information of the battery module, a capacity of fire-extinguishing agents sprayed to the battery module, whether or not there is a short circuit in the battery module, and position information of water pooled in the battery module.

13. The drainage system as claimed in claim 11 or 12, wherein the controller is configured to set an actuation condition of the drainage device based on the status information of the battery module and to control the actuation of the drainage device according to the actuation condition, and
wherein the actuation condition comprises at least one of identification information of the hole to be actuated, a start of opening, an opening speed, a size of the open hole, a start of closing, a closing speed, and a size of the closed hole.

14. The drainage system as claimed in claim 13, wherein the controller is configured to reset the actuation condition of the drainage device at a reference time or reference time interval.

15. The drainage system as claimed in claim 13 or 14, wherein the controller is configured to reset the actuation condition of the drainage device in response to the status information of the battery module being changed beyond a reference range, and/or
wherein the actuation condition further comprises identification information of the drainage device to be actuated.
